(19) Europäisches Patentamt

European Patent Office

Office européen des brevets

(11) Veröffentlichungsnummer: **0 259 797 B1**

(12) **EUROPÄISCHE PATENTSCHRIFT**

(45) Veröffentlichungstag der Patentschrift: **01.04.92**

(21) Anmeldenummer: **87112955.7**

(22) Anmeldetag: **04.09.87**

(51) Int. Cl.⁵: **G01N 21/86**, G01N 35/00, G01N 21/63, G01N 33/48, G01N 35/02

(54) Vorrichtung zum Auswerten von Teststreifen.

(30) Priorität: **10.09.86 DE 3630777**

(43) Veröffentlichungstag der Anmeldung:
**16.03.88 Patentblatt 88/11**

(45) Bekanntmachung des Hinweises auf die
Patenterteilung:
**01.04.92 Patentblatt 92/14**

(84) Benannte Vertragsstaaten:
**BE DE ES FR GB IT NL SE**

(56) Entgegenhaltungen:
**EP-A- 0 174 564**
**DE-A- 2 557 872**
**DE-A- 2 803 849**
**DE-B- 2 437 332**
**DE-B- 2 502 013**

(73) Patentinhaber: **HOECHST AKTIENGESELL-
SCHAFT
Postfach 80 03 20
W-6230 Frankfurt am Main 80(DE)**

(72) Erfinder: **Gross, Jürgen, Dr.
Frankfurter Strasse 4
W-6238 Hofheim am Taunus(DE)**
Erfinder: **Karger, Matthias
Richard-Wagner-Strasse 18
W-6239 Kriftel(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Auswerten von Teststreifen für medizinische Tests, insbesondere von Harnteststreifen mit einzelnen Testfeldern nach dem Oberbegriff des Patentanspruchs.

Für die allgemeine Harndiagnostik stehen Teststreifen zum Bestimmen von Bilirubin, Urobilinogen, Ketonkörper, Ascorbinsäure, Glukose, Protein, Nitrit, des pH-Wertes und Blut zur Verfügung. Derartige Teststreifen enthalten mehrere Testfelder, auf denen die beim jeweiligen Test zugehörenden Reagenzien als Indikator angeordnet sind. Die Teststreifen werden mit Urin befeuchtet und anschließend photometrisch analysiert.

Es sind automatisch arbeitende Mehrkanal-Remissionsphotometer bekannt, mit deren Hilfe der Teststreifen durch definierte Lichtquellen und Lichtempfänger analysiert wird. Diese hoch differenzierten Photometer eigenen sich insbesondere für Großserienuntersuchungen in chemisch-medizinischen Untersuchungslaboratorien.

Nach der DE-B-24 37 332 ist ein automatisch arbeitendes Analysengerät zum Auswerten von Teststreifen bekannt, bei dem der Prüftisch, auf dem sich der Teststreifen befindet und der mit Positionsmarkierungen für die Testfelder versehen ist, schrittweise unter einem über dem Prüftisch stationär angeordneten Einkanal-Remissionsphotometer verschoben wird.

Nach der DE-A-28 03 849 ist ein Gerät zum Auswerten von Teststreifen bekannt, bei dem der Teststreifenträger als drehbar gelagerte Walze ausgebildet ist und das Einkanal-Remissionsphotometer parallel zur Walzenachse verschoben werden kann.

Der Erfindung liegt die Aufgabe zugrunde, eine Vorrichtung in Modulbauweise zu schaffen, die für die wirtschaftliche Untersuchung von Kleinserien in Arztpraxen und mobilen Einrichtungen geeignet ist.

Die Aufgabe wird durch eine Vorrichtung der eingangs genanten Art gelöst, die dadurch gekennzeichnet ist, daß auf der Arbeitsplatte parallel zu den Teststreifen und Positionsmarkierungen Führungsrillen für den Meßkopf angeordnet sind, und der Meßkopf mit mindestens drei Führungseinrichtungen versehen ist, von denen zwei in eine erste Führungsrille und die dritte in eine zweite Führungsrille eingreifen.

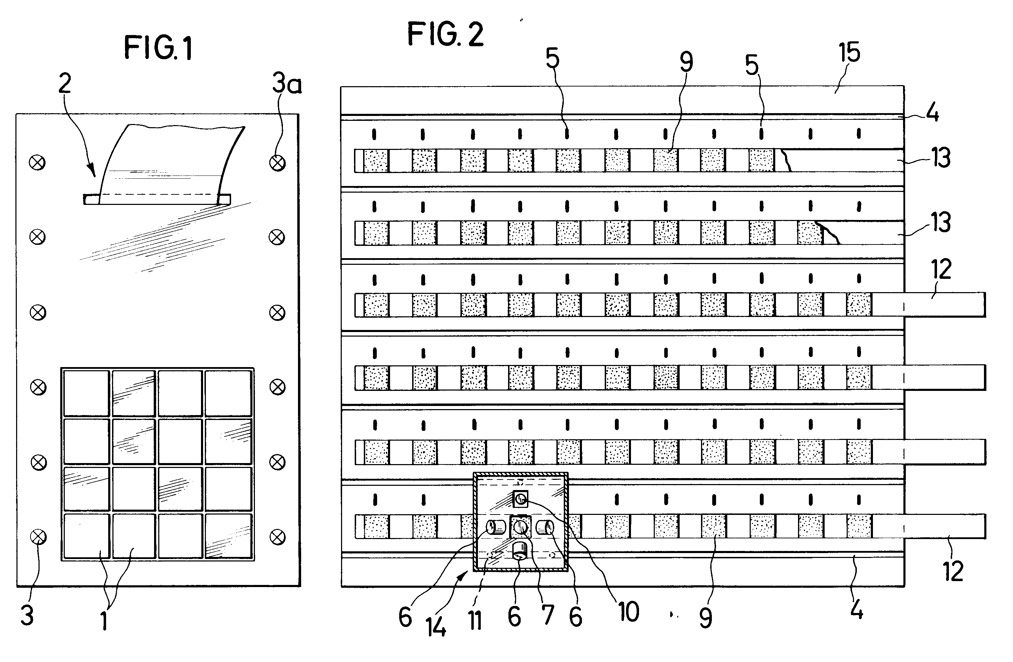

Im folgenden wird die Erfindung anhand von lediglich einen Ausführungsweg darstellenden Zeichnungen näher erläutert.
Es zeigt
Figur 1 das Terminal in Draufsicht,
Figur 2 die Arbeitsplatte mit Meßkopf in Draufsicht und

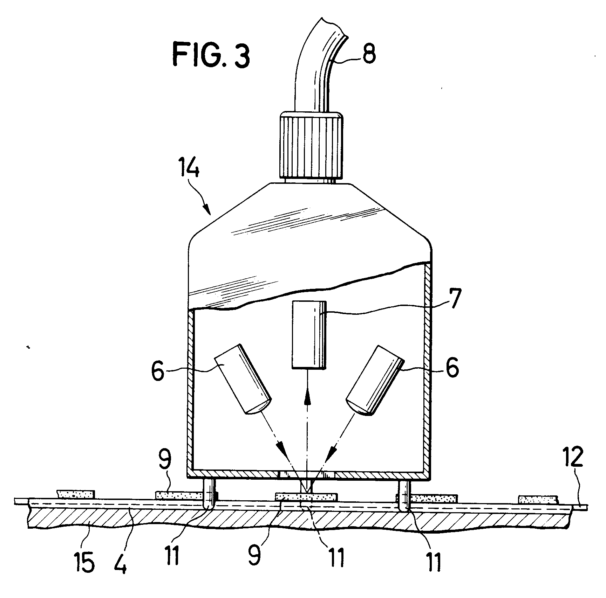

Figur 3 die Arbeitsplatte mit Meßkopf in Seitenansicht, teilweise geschnitten.

Das Terminal enthält im wesentlichen eine Verarbeitungseinrichtung für die vom Meßkopf (14) kommenden elektrischen Signale, eine Speichereinrichtung, eine Bedieneinrichtung mit Tastatur (1), Signalleuchten (3,3a), sowie einen Drucker (2). Je nach Vorprogrammierung leuchten nach Inbetriebnahme nacheinander die grünen Signalleuchten im Abstand von z. B. jeweils 10 Sekunden auf und zeigen an, daß jeweils ein Teststreifen (12) mit Urin zu befeuchten und auf der Aufnahmeeinrichtung (13) abzulegen ist, die zur gerade leuchtenden Signallampe (3) gehört. Sobald die Arbeitsplatte (15) mit Teststreifen (12) gefüllt ist - d. i. nach dem eingangs gewählten Programm 60 Sekunden nach Aufleuchten der ersten grünen Signallampe (3) - leuchtet die erste rote Signallampe (3a) auf und zeigt an, daß der Meßkopf (14) über den ersten Teststreifen gefahren werden muß. Die 6 Teststreifen werden ebenfalls im 10-Sekundentakt überfahren. Der Meßkopf (14) ist über ein Kabel (8) mit dem Terminal verbunden. Er ist mit bis zu 3 Lichtquellen (6) unterschiedlicher Wellenlänge, mit mindestens einem Lichtempfänger (7) und mit mindestens einem Positionsdetektor (10) ausgerüstet. Außerdem kann der Meßkopf drei Führungseinrichtungen (11) aufweisen. Die Arbeitsplatte (15) besitzt eine Aufnahmeeinrichtung (13) für die Teststreifen (12). Seitlich der Aufnahmeeinrichtung ist für jedes Testfeld (9) eine Positionsmarkierung (5) angebracht und seitlich zu den Teststreifen (12) und den Positionsmarkierungen (5) sind Führungsrillen (4) für die Führungseinrichtungen (11) des Meßkopfes (14) angeordnet.

Pro Testfeld werden maximal zwei Wellenlängen gespeichert und ausgewertet (z.B. Vergleich mit gespeicherten Eichkurven bzw. Tabellen). Bei 6 Teststreifen (12) mit üblicherweise 11 Testfeldern (9) werden also maximal 132 Werte gespeichert und ausgewertet. Die Ergebnisse werden angezeigt oder - wie dargestellt - ausgedruckt. Die Arbeitsplatte (15) kann gereinigt und neu befüllt werden. Das Terminal wird in üblicher Weise mit einem Standardgraustreifen kalibriert. Meßbereichsgrenzen und/oder Eichkurven werden mit der Tastatur (1) eingegeben. Ebenso der Dialog mit dem Drucker geführt. Positionserkennung, Funktionskontrollen und Wiederholmessungen sind ebenfalls möglich.

**Patentansprüche**

1. Vorrichtung zum Auswerten von Teststreifen mit einzelnen Testfeldern bestehend aus einer Arbeitsplatte (15) mit Aufnahmeeinrichtungen (13) für die Teststreifen (12) und Positionsmarkierungen (5) für die Testfelder (9), einem Meßkopf (14) mit auf die Testfelder (9) gerichteten Lichtquellen (6) unterschiedlicher Wellenlänge, einem Lichtempfänger (7) und einem, auf die Positionsmarkierungen (5) gerichteten Positionsdetektor (10), sowie einer Einrichtung zum Bedienen, Verarbeiten, Speichern und Ausgeben von elektrischen Signalen, dadurch gekennzeichnet, daß auf der Arbeitsplatte (15) parallel zu den Teststreifen (12) und den Positionsmarkierungen (5) Führungsrillen (4) für den Meßkopf angeordnet sind, und der Meßkopf (14) mit mindestens 3 Führungseinrichtungen (11) versehen ist, von denen zwei in eine erste Führungsrille und die dritte in eine zweite Führungsrille eingreifen, wodurch der Meßkopf (14) relativ zur Arbeitsplatte (15) verschiebbar ist.

## Claims

1. A device for evaluating test strips having individual test sections, consisting of a work platform (15) with holders (13) for the test strips (12) and position marks (5) for the test sections (9), a sensing head (14) with light sources (6) of different wavelength, directed towards the test sections (9), a light receiver (7) and a position detector (10) directed towards the position marks (5) and a device for operating, processing, storing and emitting electrical signals, wherein guide grooves (4) for the sensing head are arranged on the work platform (15) parallel to the test strips (12) and the position marks (5), and the sensing head (14) is provided with at least 3 guide devices (11), two of which engage a first guide groove and the third of which engages a second guide groove, by means of which the sensing head (14) is displaceable relative to the work platform (15).

## Revendications

1. Dispositif d'évaluation de bandes d'essai munies de champs d'essai individuels, constitué d'une plaque de travail (15) présentant des dispositifs récepteurs (13) pour les bandes d'essai (12) et des repères de position (5) pour les champs d'essai (9), d'une tête de mesure (14) présentant des sources lumineuses (6) de différentes longueurs d'onde dirigées sur les champs d'essai (9), d'un récepteur de lumière (7) et d'un détecteur de position (10) dirigé sur les repères de position (5), ainsi que d'un dispositif pour commander, traiter, mémoriser et délivrer des signaux électriques, caractérisé en ce que des rainures de guidage (4) pour la tête de mesure sont disposées parallèlement aux bandes d'essai (12) et aux repères de position (5) sur la plaque de travail (15), et la tête de mesure (14) est munie d'au moins 3 dispositifs de guidage (11), dont deux s'engagent dans une première rainure de guidage et le troisième dans une seconde rainure de guidage, de sorte que la tête de mesure (14) peut être déplacée en translation par rapport à la plaque de travail (15).

# FIG.1

# FIG.2

EP 0 259 797 B1

FIG. 3